# EUROPEAN PATENT SPECIFICATION

(11) **EP 3 051 186 B1**
(45) Date of publication and mention of the grant of the patent: **08.05.2019**
(21) Application number: 14847352.3
(22) Date of filing: 07.08.2014
(51) Int. Cl.: F16J 15/10, F01N 3/28, F01N 13/18, F01N 3/021

(54) **PRODUCTION METHOD FOR HOLDING SEAL MATERIAL**
HERSTELLUNGSVERFAHREN FÜR HALTEDICHTUNGSMATERIAL
PROCÉDÉ DE PRODUCTION DE MATÉRIAU D'ÉTANCHÉITÉ DE RETENUE

(30) Priority: 24.09.2013 JP 2013197537
(43) Date of publication of application: 03.08.2016
(73) Proprietor: Ibiden Co., Ltd., Gifu 503-8604 (JP)
(72) Inventor: KUMANO Keiji, Takahama-shi Aichi 444-1301 (JP); OKABE Takahiko, Takahama-shi Aichi 444-1301 (JP)
(74) Representative: Kuhnen & Wacker Patent- und Rechtsanwaltsbüro PartG mbB
(86) International application number: PCT/JP2014/070857
(87) International publication number: WO 2015/045636

(56) References cited:
- WO-A2-2010/077360
- JP-A- 2001 192 271
- JP-A- 2005 054 726
- JP-A- 2006 342 774
- JP-A- 2008 045 521
- US-A1- 2006 278 323
- US-A1- 2007 084 171
- US-A1- 2008 044 317
- US-A1- 2009 257 925

## Description

### TECHNICAL FIELD

The present invention relates to a method for producing a holding sealing material.

### BACKGROUND ART

Exhaust gas discharged from internal combustion engines (e.g., diesel engines) contains particulates such as soot (hereinafter also referred to as "PM"), and adverse effects of PM on the environment and human bodies have been problems. Exhaust gas also contains harmful gas components such as CO, HC, and NOx, and thus has raised concerns regarding effects of such harmful gas components on the environment and human bodies.

Thus, various exhaust gas purification apparatuses that collect PM in exhaust gas or purify harmful gas components have been proposed. Such exhaust gas purification apparatuses include an exhaust gas treating body made of porous ceramic such as silicon carbide or cordierite, a casing for housing the exhaust gas treating body, and a holding sealing material made of an inorganic fiber aggregate and arranged between the exhaust gas treating body and the casing. The holding sealing material is arranged mainly for preventing the exhaust gas treating body from being damaged by contact with the casing that covers the periphery of the exhaust gas treating body due to vibrations and impacts caused by traveling or the like of the automobile, and for preventing exhaust gas from leaking from a space between the exhaust gas treating body and the casing. Thus, the holding sealing material is required to have a function to reliably hold the exhaust gas treating body by increasing the contact pressure produced by repulsion upon compression. In addition, it is known that inorganic fibers constituting the holding sealing material are ruptured and scattered in the air when the exhaust gas treating body is housed into the casing. Such scattering of inorganic fibers in the air adversely affects the health of workers handling the holding sealing material.

To solve these problems, for example, Patent Literature 1 suggests a holding sealing material in which an organic binder having a glass-transition temperature of 5°C or lower is impregnated.

Patent Literature 2 discloses a mounting member for mounting a pollution control element within a casing, said mounting member comprising a mat containing inorganic fiber material, with said mat having a thickness with an external portion, an internal portion and a middle portion therebetween, said external portion having an external peripheral surface for contacting the casing and said internal portion having an internal peripheral surface for contacting the pollution control element, with at least the internal peripheral surface of said internal portion, and optionally the external peripheral surface of said external portion, being impregnated with a friction/adhesion controlling agent such that the coefficient of friction between said external peripheral surface and the casing is lower than the coefficient of friction between said internal peripheral surface and the pollution control element.

Patent Literature 3 discloses a holding sealer comprising inorganic fibers, which holding sealer has a first surface and a second surface,
wherein the first surface has a reentrant portion within a region that is a fixed distance inside from an end of the first surface.

Patent Literature 4 discloses a high strength inorganic bio-soluble fiber insulation mat comprising high temperature resistant alkaline earth silicate fibers and optionally additional non- respirable inorganic fibers, wherein the insulation mat has a structure of partially interlocking fibers and an organics content of less than 20 weight percent prior to exposure to temperatures of at least 600°C.

Patent Literature 5 discloses a holding sealing material comprising:
a mat body comprising: a first inorganic fiber containing about 60% by weight or more of alumina; and a second inorganic fiber containing about 67% by weight or more of silica, the first inorganic fiber and the second inorganic fiber being in a mixed state.

Patent Literature 6 discloses a manufacturing method of a holding and sealing material which is configured to be set between a catalyst carrier and a shell covering the outside of the catalyst carrier in a catalytic converter for purifying an exhaust gas comprising: a infiltrating step for infiltrating a mat-like material formed by arranging inorganic fibers in a mat shape with emulsion made by dispersing a organic binder into water; and a drying step for attaching the organic binder to the mat-like material by means of drying the mat-like material containing the emulsion and obtaining the holding and sealing material,
wherein the organic binder has a glass transition point Tg of less than or equal to approximately 5°C.

Patent Literature 7 discloses a mat-shaped retaining seal member mainly consisting of inorganic fibers and characterized by containing an organic binder having coating strength of 5.0·10⁶ m⁻¹·kg·s⁻² (5 MPa) or more at normal temperature.

### CITATION LIST

### - Patent Literature

Patent Literature 1: JP-A 2006-342774
Patent Literature 2: US 2007/084 171 A1
Patent Literature 3: US 2008/044 317 A1
Patent Literature 4: WO 2010/077 360 A2
Patent Literature 5: US 2009/257 925 A1
Patent Literature 6: US 2006/278 323 A1

### SUMMARY OF INVENTION

### - Technical Problem

A press-fitting method is employed to arrange the holding sealing material between the exhaust gas treating body and the casing.

In the press-fitting method, the holding sealing material is wound around the exhaust gas treating body to produce a wound body, and the wound body is press-fitted into the metal casing using a press-fitting jig. For press-fitting, the holding sealing material slides along the inner surface of the press-fitting jig toward the casing.

When press-fitting the holding sealing material containing an organic binder having a low glass-transition temperature as disclosed in Patent Literature 1, the organic binder contained in the holding sealing material tends to be softened and tacky in a high temperature environment (higher than 30°C) as in high-temperature regions with tropical climate or in the summer time in Japan. In some cases, the softened organic binder is adhered to the press-fitting jig during press-fitting, soiling the surface of the press-fitting jig.

Since the press-fitting jig is used repeatedly, unclean substances derived from the organic binder accumulate on the surface of the press-fitting jig as a result of repeated press-fitting.

The accumulation of unclean substances on the surface of the press-fitting jig increases the frictional force that is applied between the surface of the press-fitting jig and the holding sealing material during press-fitting. Once the frictional force (maximum static frictional force) exceeds the shear failure load (the load at which shear failure occurs) of the holding sealing material, shear failure will occur in the holding sealing material, resulting in a press-fitting failure.

The present invention has been made to solve the above problems and aims to provide a method for producing a holding sealing material.

### - Solution to Problem

The above problems are solved by the subject-matter of claim 1.

Disclosed is a holding sealing material including a mat having a predetermined thickness, the mat containing inorganic fibers having a surface coated with a binder layer,
wherein the binder layer contains an organic binder and an inorganic binder, and
the organic binder is a self-crosslinking resin.

In the holding sealing material, the binder layer that coats the surface of each inorganic fiber also contains an inorganic binder in addition to the organic binder.

The inorganic binder contains inorganic particles. The presence of the inorganic particles in the binder layer increases the coating strength of the binder layer even in a high temperature environment.

In addition, when the organic binder is a self-crosslinking resin, the self-crosslinking resin undergoes self-crosslinking around the inorganic particles, forming a firm crosslinked film with each inorganic particle as the core. Thus, the coating strength of the binder layer containing the inorganic particles and the self-crosslinking resin is higher than that of a layer containing only the self-crosslinking resin.

As a result of a higher coating strength of the binder layer, the binder layer is less likely to be peeled off from the inorganic fibers even when press-fitting is performed using a press-fitting jig. Thus, the materials of the binder layer are less likely to be attached to the press-fitting jig.

Thus, the holding sealing material is less likely to cause soiling of the surface of a press-fitting jig even when the press-fitting jig is used for press-fitting in a high temperature environment. In addition, shear failure does not occur in the holding sealing material even when the same press-fitting jig is used repeatedly for press-fitting.

Herein, the surface of each inorganic fiber does not have to be entirely coated with the binder layer and may partially include portions where the binder layer is not formed, as long as the effects of the present invention are achieved.

In the holding sealing material, the organic binder preferably has a glass-transition temperature of 5°C or lower.

The organic binder having a glass-transition temperature of 5°C or lower is preferred because scattering of fibers can be easily prevented. In addition, owing to the presence of the inorganic binder in the binder layer of the holding sealing material, the holding sealing material is less likely to cause soiling of the surface of a press-fitting jig even when the holding sealing material contains the organic binder having a glass-transition temperature of 5°C or lower which tends to be softened and tacky in a high temperature environment, thus preventing occurrence of shear failure in the holding sealing material during a press-fitting step.

In the holding sealing material, the inorganic particles as the inorganic binder are preferably dispersed in a self-crosslinking resin component as the organic binder.

The inorganic particles being dispersed in the self-crosslinking resin component provides a more uniform increase in the strength of the binder layer over a large part of the surface of each inorganic fiber. Thus, the shear failure load and the contact pressure of the holding sealing material can be increased.

In the holding sealing material, the percentage of weight loss of the holding sealing material after heating at 600°C for one hour is preferably 0.1 to 10% relative to 100% of the weight of the holding sealing material before heating.

The percentage of weight loss of the holding sealing material after heating at 600°C for one hour corresponds to the amount of the organic binder contained in the holding sealing material. If the percentage of weight loss is less than 0.1%, the portions where the binder layer is to be formed will be small, and the effect of suppressing scattering of the inorganic fibers will be reduced. If the percentage of weight loss is more than 10%, the effect of suppressing scattering of the inorganic fibers will remain substantially the same, and the amount of decomposed gas generated by heat of exhaust gas will be large, which may adversely affect the surrounding environment.

A method for producing the holding sealing material includes the steps of:
preparing a mat containing inorganic fibers;
applying a binder solution containing an organic binder made of a self-crosslinking resin and an inorganic binder to the mat; and
drying the mat to which the binder solution was applied;
wherein the binder solution further contains a polymeric dispersant, the concentration of the polymeric dispersant in the binder solution is 50 to 1000 ppm, and
a mixing ratio by solids weight of the inorganic particles as the inorganic binder in the mixture of the inorganic binder and the polymeric dispersant to the self-crosslinking resin as the organic binder component in the organic binder solution of 3:1 to 1:3

Through these steps, it is possible to produce the holding sealing material in which the binder layer containing the organic binder made of a self-crosslinking resin and the inorganic binder is formed on the surface of each inorganic fiber.

The presence of the polymeric dispersant in the binder solution allows the inorganic particles in the inorganic binder to be uniformly dispersed in the binder solution so that the inorganic particles are attached to the inorganic fibers over a large part of the surface, thus uniformly increasing the strength of the binder layer.

A method for press-fitting a wound body includes the steps of: producing a wound body in which the holding sealing material is wound around an exhaust gas treating body;
providing a press-fitting jig having an inner space that gradually increases in size from a small radius end portion to a large radius end portion and fitting the small radius end portion of the press-fitting jig into one end of a metal casing so as to fix the press-fitting jig therein; and
pushing the wound body into the press-fitting jig from the large radius end portion so as to press-fit the wound body into the metal casing.

In the case where the wound body including the holding sealing material being wound is press-fitted by the above method, it is advantageous in the following points: shear failure which results in press-fitting failure does not occur in the holding sealing material even when the same press-fitting jig is repeatedly used for press-fitting; and the surface of the press-fitting jig is less susceptible to soiling so that the press-fitting jig does not need to be frequently washed even when the same press-fitting jig is repeatedly used for press-fitting.

An exhaust gas purification apparatus includes a metal casing;
an exhaust gas treating body housed in the metal casing; and
a holding sealing material wound around the exhaust gas treating body and arranged between the exhaust gas treating body and the metal casing,
wherein the holding sealing material is the holding sealing material.

### BRIEF DESCRIPTION OF DRAWINGS

Fig. 1 is a schematic perspective view of an example of the holding sealing material.
Fig. 2 is a schematic view of a pull-out testing device for holding sealing materials.
Fig. 3 is a schematic view of a shear failure load testing device for holding sealing materials.
Fig. 4(a), Fig. 4(b), and Fig. 4(c) are schematic perspective views of the method for press-fitting a wound body.
Fig. 5 is a schematic cross-sectional view of an example of the exhaust gas purification apparatus.
Fig. 6 is a schematic perspective view of an example of the exhaust gas treating body constituting the exhaust gas purification apparatus.
Fig. 7 is a scatter plot of the results of a pull-out test in Example 2.
Fig. 8 is a scatter plot of the results of a pull-out test in Comparative Example 3.

### DESCRIPTION OF EMBODIMENTS

The holding sealing material is described in detail below. The present invention is not limited to the structures described below, and suitable modifications may be made without departing from the scope of the present invention. The present invention also encompasses a combination of two or more preferred structures described below.

The holding sealing material is described below.

The holding sealing material is a holding sealing material including a mat having a predetermined thickness, the mat containing inorganic fibers having a surface coated with a binder layer,
wherein the binder layer contains an organic binder and an inorganic binder, and
the organic binder is a self-crosslinking resin.

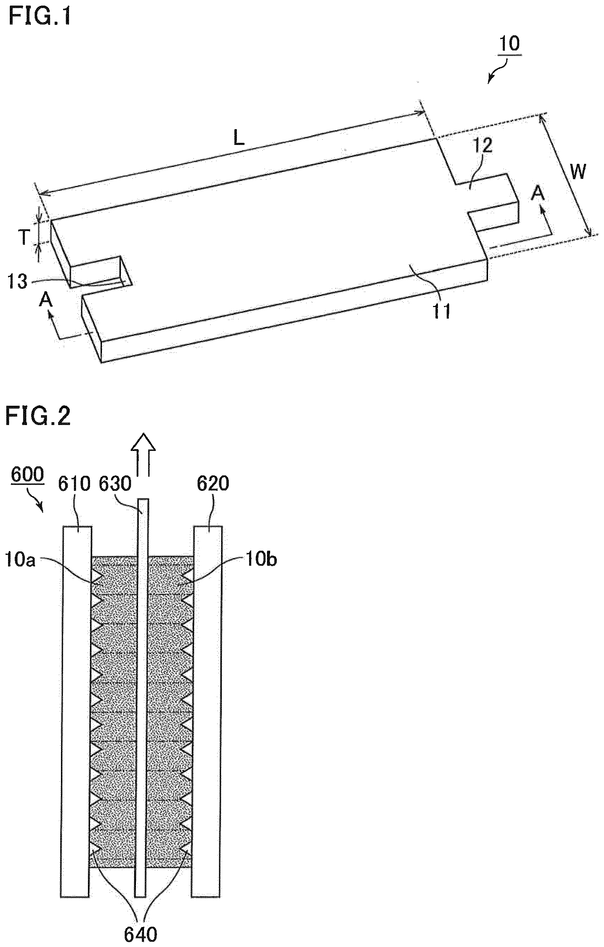

Fig. 1 is a schematic perspective view of an example of the holding sealing material.

As illustrated in Fig. 1, a holding sealing material 10 includes a tabular mat 11 having predetermined length (hereinafter indicated by an arrow L in Fig. 1), width (indicated by an arrow W in Fig. 1), and thickness (indicated by an arrow T in Fig. 1). The mat 11 is generally rectangular in a plan view.

The mat 11 illustrated in Fig. 1 includes a projecting portion 12 on one end and a recessed portion 13 on the other end in the longitudinal direction of the mat 11. The projecting portion 12 and the recessed portion 13 of the mat 11 are formed to fit each other when the mat 11 is wound around an exhaust gas treating body to assemble an exhaust gas purification apparatus (described later).

The mat 11 contains inorganic fibers having a surface coated with a binder layer. The binder layer contains an organic binder and an inorganic binder.

Any inorganic fibers may be used. Preferably, the inorganic fibers include at least one selected from the group consisting of alumina fibers, silica fibers, alumina-silica fibers, mullite fibers, biosoluble fibers, and glass fibers.

The inorganic fibers including at least one selected from the group consisting of alumina fibers, silica fibers, alumina-silica fibers, and mullite fibers have excellent heat resistance. Thus, even when the exhaust gas treating body is exposed to a sufficiently high temperature, the function of the holding sealing material can be sufficiently maintained without being deteriorated or the like. In the case where the inorganic fibers are biosoluble fibers, there is no damage to the health of workers even if the workers inhale scattered inorganic fibers during production of an exhaust gas purification apparatus using the holding sealing material because the biosoluble fibers will be dissolved in the body.

Alumina fibers may contain additives such as calcia, magnesia, and zirconia, in addition to alumina.

The ratio of the components of the alumina-silica fibers by weight is preferably Al₂O₃:SiO₂ = 60:40 to 80:20, more preferably Al₂O₃:SiO₂ = 70:30 to 74:26.

The mat constituting the holding sealing material can be produced by various methods such as needling method or papermaking method.

The average fiber length of the inorganic fibers constituting the mat produced by the needling method is preferably 1 to 150 mm, more preferably 10 to 80 mm.

Inorganic fibers having an average fiber length of less than 1 mm are too short, resulting in insufficient entangling of the inorganic fibers. Thus, the holding sealing material will be poorly wound around an exhaust gas treating body and susceptible to cracking. Inorganic fibers having an average fiber length of more than 150 mm are too long, resulting in a low density mat due to a smaller number of fibers constituting the holding sealing material. As a result, the shear strength of the holding sealing material will decrease.

The average fiber length of the inorganic fibers constituting a mat produced by the papermaking method is preferably 0.1 to 20 mm.

Inorganic fibers having an average fiber length of less than 0.1 mm are too short and thus substantially no longer able to exhibit characteristics of the fibers. Thus, the fibers will not be suitably entangled with each other when assembled together in the form of a mat, failing to achieve a sufficient contact pressure. Inorganic fibers having an average fiber length of more than 20 mm are too long and thus too strongly entangled with each other in a slurry solution obtained by dispersing the fibers in water during a papermaking step. Thus, the fibers tend to accumulate unevenly when assembled together in the form of a mat.

The organic binder contained in the binder layer is a self-crosslinking resin. The self-crosslinking resin is a resin that can form a crosslinked structure without using a crosslinking agent.

Examples of the self-crosslinking resin include acrylic resins, acrylate latex, rubber latex, water-soluble organic polymers (e.g., carboxymethyl cellulose and polyvinyl alcohol), thermoplastic resins (e.g., styrene resin), and thermosetting resins (e.g., epoxy resin).

In particular, those having two or more functional groups in which a reaction occurs between these substituents are preferred. For example, a preferred self-crosslinking resin has groups such as hydroxyl, carboxyl, epoxide, amide, N-methylolamide, amino, and isocyanate groups, and forms a crosslinked structure by a reaction such as an esterification reaction between an epoxide or hydroxyl group and a carboxyl group or a condensation reaction between a carboxyl or hydroxyl group and an N-methylol group.

Examples include resin obtained by homopolymerizing or copolymerizing hydroxyl group-containing monomers such as 2-hydroxyethyl acrylate, 2-hydroxyisopropyl methacrylate, and allyl alcohol; carboxyl group-containing monomers such as acrylic acid, methacrylic acid, and maleic acid; epoxide group-containing monomers such as glycidyl acrylate and allyl glycidyl ether; methylolated amide group-containing monomers such as methylolated acrylamide and alkoxymethylacrylamide; amino group-containing monomers such as aminoethyl methacrylate and dimethylaminoethyl methacrylate. Examples also include resin obtained by copolymerizing certain reactive monomers and subjecting the resulting polymer to chemical treatment so as to form a side chain having a target functional group.

The holding sealing material is a holding sealing material which is less likely to cause soiling of the surface of a press-fitting jig even when the press-fitting jig is used for press-fitting in a high temperature environment, and in which shear failure does not occur even when the same press-fitting jig is used repeatedly for press-fitting.

A pull-out test described below can be used to evaluate the presence or absence of unclean substances on the surface of the press-fitting jig when the press-fitting jig is used for press-fitting in a high temperature environment, and the shear failure of the holding sealing material press-fitted when the same press-fitting jig is repeatedly used.

For the pull-out test, the mat is cut to produce 20 or more test pieces having the same shape (for example, 50 mm × 50 mm), and a stainless steel plate is sandwiched between the test pieces from both sides. The test pieces are compressed to a bulk density of 0.5 g/cm³, and the temperature between the stainless steel plate and the test pieces is maintained at 50°C. In this state, the stainless steel plate is pulled out between the test pieces at a pulling speed of 25 mm/min.

The pull-out test is described more specifically with reference to the drawing.

Fig. 2 is a schematic view of a pull-out testing device for holding sealing materials.

A pull-out testing device 600 includes stainless steel heaters (a left heater 610 and a right heater 620) oppositely disposed on the left side and the right side of the device. The left heater 610 is a load cell and can measure the load applied to the right side (the side that comes into contact with a test piece) of the left heater 610.

First, two test pieces 10a and 10b and a stainless steel plate 630 are arranged in such a manner that the left heater 610, the test piece 10a, the stainless steel plate 630, the test piece 10b, and the right heater 620 are arranged in the stated order.

The test piece 10a is sandwiched between the left heater 610 and the stainless steel plate 630, and the test piece 10b is sandwiched between the stainless steel plate 630 and the right heater 620.

The stainless steel plate 630 is a load cell and can measure the load applied to the stainless steel plate 630.

Projecting members 640 are provided on the surface of the left heater 610 and the right heater 620 to prevent slipping between the left heater 610 and the test piece 10a and between the right heater 620 and the test piece 10b (i.e., between the plate and the holding sealing material).

First, pressure is applied to the left heater 610 and the right heater 620 in the direction toward the stainless steel plate 630 so as to compress the test pieces to a bulk density (GBD) of 0.5 g/cm³.

The temperature of the left heater 610 and the right heater 620 is adjusted to bring the temperature between the test piece 10a and the stainless steel plate 630 and between the test piece 10b and the stainless steel plate 630 to 50°C.

The test pieces are maintained in the compressed state for 10 minutes (relaxation).

Subsequently, the stainless steel plate 630 is moved at a speed of 25 mm/min in the direction (upward) indicated by an arrow in Fig. 2 to pull out the stainless steel plate 630.

At this point, the static frictional force applied to the stainless steel plate is measured, and the frictional force at which the static frictional force is maximum (i.e., the maximum static frictional force) is recorded.

In addition, the surface of the stainless steel plate that was pulled out is visually observed to determine the presence or absence of unclean substances on the surface of the stainless steel plate.

The pull-out test is repeated by replacing the test pieces every time and repeatedly using the same stainless steel plate. If shear failure does not occur in the test pieces when the stainless steel plate is pulled out between the test pieces even in the 10th pull-out test, the holding sealing material is determined to be a holding sealing material in which shear failure does not occur even when press-fitting is performed repeatedly using the same press-fitting jig. A preferred holding sealing material is one in which shear failure does not occur in the test pieces when the stainless steel plate is pulled out between the test pieces even in the 15th pull-out test. A more preferred holding sealing material is one in which shear failure does not occur in the test pieces even the stainless steel plate is pulled out between the test pieces even in the 20th pull-out test.

If the amount of the organic binder attached to the stainless steel plate is large, unclean substances derived from the organic binder will accumulate on the surface of the stainless steel plate during 10 repeated tests. Consequently, the frictional force that is applied between the surface of the stainless steel plate and the test pieces will increase in proportion to the number of repetitions. Once the frictional force (maximum static frictional force) exceeds the shear failure load (the load at which shear failure occurs) of the test pieces, shear failure will occur in the test pieces.

In contrast, if the amount of the organic binder attached to the stainless steel plate is small, the amount of unclean substances derived from the organic binder to accumulate on the surface of the stainless steel plate will be small. Thus, the frictional force (maximum static frictional force) will not exceed the shear failure load (the load at which shear failure occurs) of the test pieces even after 10 repeated tests. As a result, shear failure will not occur in the test pieces.

Specifically, in the holding sealing material, the maximum static frictional force between the stainless steel plate and the test pieces measured in the 10th pull-out test is preferably smaller than the shear failure load at which shear failure occurs in the test pieces.

The reason for the above is that, presumably, shear failure will not occur in the holding sealing material during a press-fitting step if the maximum static frictional force is smaller than the shear failure load.

A more preferred holding sealing material is one in which the maximum static frictional force between the stainless steel plate and the test pieces measured in the 15th pull-out test is smaller than the shear failure load at which shear failure occurs in the test pieces, and a still more preferred holding sealing material is one in which the maximum static frictional force between the stainless steel plate and the test pieces measured in the 20th pull-out test is smaller than the shear failure load at which shear failure occurs in the test pieces.

The shear failure load at which shear failure occurs in the test pieces can be measured by the following method.

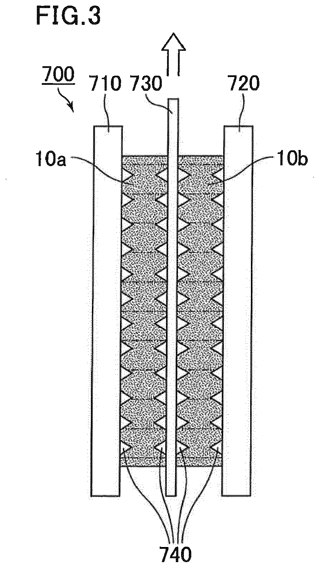

Fig. 3 is a schematic view of a shear failure load testing device for holding sealing materials.

A shear failure load testing device 700 illustrated in Fig. 3 has a structure substantially the same as that of the pull-out testing device 600 illustrated in Fig. 2; however, a large number of projecting members 740 are provided on the surface (the side that comes into contact with the test piece) of each of a left heater 710, a right heater 720, and a stainless steel plate 730.

The test pieces 10a and 10b are punctured by the projecting members 740 and thereby fixed to the left heater 710, the right heater 720, and the stainless steel plate 730.

In this state, the test pieces are compressed to a bulk density (GBD) of 0.5 g/cm³.

The temperature of the left heater 710 and the right heater 720 is adjusted to bring the temperature between the test piece 10a and the stainless steel plate 730 and the temperature between the test piece 10b and the stainless steel plate 730 to 50°C.

The test pieces are maintained in the compressed state for 10 minutes (relaxation).

Subsequently, the stainless steel plate 730 is moved at a speed of 25 mm/min in the direction (upward) indicated by an arrow in Fig. 3. Yet, the test pieces 10a and 10b are fixed to the stainless steel plate 730 with the projecting members 740 so that the stainless steel plate 730 cannot be freely pulled out from the test pieces 10a and 10b. Thus, shear failure will occur in the test pieces 10a and 10b when shear force equal to or exceeding the shear failure load of the test pieces is applied to the test pieces 10a and 10b.

The shear force applied to the stainless steel plate at which shear failure occurred in the test pieces is regarded as the shear failure load of the test pieces.

The stainless steel plate to be used in the pull-out test is preferably a general-purpose ferritic stainless steel plate (for example, SUS430 and SUS409).

As for the surface finish of the stainless steel plate, a mirror-finished smooth plate surface is preferred for easy visual observation of unclean substances on the surface when the mat is slid. The flatness of No. 2B or higher as expressed in the description of the Japanese Industrial Standards (JIS) G 4305 is preferred. A plate having a flatness of No. 3 or No. 4, or a plate polished with #240, #320, or #400 grade sand paper may also be used.

The surface roughness is preferably as follows: Ra = 0.01 to 0.2 µm.

The stainless steel plate to be used for measuring the shear failure load may be a stainless steel plate to be used in the pull-out test in which projecting members are formed on the surface for fixing the test pieces.

The pull-out test is a test in which unclean substances derived from the holding sealing material which are attached to the press-fitting jig during the press-fitting step are examined by using a stainless steel plate instead of a press-fitting jig, and by using test pieces produced by cutting the mat instead of the holding sealing material.

The pull-out test is repeated by replacing the test pieces every time and repeatedly using the same stainless steel plate. Thereby, it is possible to examine the impact of unclean substances derived from the holding sealing material which accumulate on the press-fitting jig during the press-fitting step.

If no shear failure occurred in the test pieces even after 10 repeated pull-out tests, the holding sealing material corresponding to the test pieces is considered to be a holding sealing material which is less likely to cause soiling of the surface of a press-fitting jig even when the press-fitting jig is used for press-fitting in a high temperature environment, and in which shear failure does not occur even when the same press-fitting jig is used repeatedly for press-fitting.

The percentage of weight loss of the holding sealing material after heating at 600°C for one hour is preferably 0.1 to 10% relative to 100% of the weight of the holding sealing material before heating.

The percentage of weight loss of the holding sealing material after heating at 600°C for one hour corresponds to the amount of the organic binder in the holding sealing material. If the percentage of weight loss is less than 0.1%, the portions where the binder layer is to be formed will be small, and the effect of suppressing scattering of the inorganic fibers will be reduced. If the percentage of weight loss is more than 10%, the effect of suppressing scattering of the inorganic fibers will remain substantially the same, and the amount of decomposed gas generated by heat of exhaust gas will be large. This may adversely affect the surrounding environment.

The glass-transition temperature of the organic binder is preferably 5°C or lower, more preferably -5°C or lower, still more preferably -10°C or lower, particularly preferably -30°C or lower. If the organic binder has a glass-transition temperature of 5°C or lower, the resulting holding sealing material will have a high degree of elongation and excellent flexibility while the coating strength of the binder layer is increased. Thus, the holding sealing material will be less likely to be broken, for example, when the holding sealing material is wound around the exhaust gas treating body. In addition, since the binder layer will not be too hard, scattering of the inorganic fibers will be likely to be suppressed.

Examples of the inorganic binder contained in the binder layer include inorganic particles in the solid form in which a solvent is removed from an inorganic particle solution such as an inorganic sol dispersion.

The inorganic sol dispersion (inorganic particle solution) is not particularly limited. Examples include an alumina sol and a silica sol.

The inorganic particles are preferably alumina particles derived from an alumina sol and silica particles derived from a silica sol.

Although the particle diameter of the inorganic particles is not particularly limited, the average particle diameter of the inorganic particles is preferably 0.005 to 0.1 µm.

The inorganic particles contained in the binder layer are preferably dispersed in the self-crosslinking resin component as the organic binder.

The presence of the inorganic particles in the binder layer increases the coating strength of the binder layer, and the binder layer is less likely to be peeled off from the inorganic fibers.

The inorganic particles will remain on the surface of each inorganic fiber without being burned even after the exhaust gas purification apparatus is used, and numerous depressions and projections will be formed on the entire surface of each inorganic fiber, presumably due to exposure of the inorganic particles dispersed in the binder layer as a result of the organic binder being burned off. Once the depressions and projections resulting from the inorganic particles are formed on the entire surface of each inorganic fiber, the inorganic fibers are entangled with each other due to the depressions and projections when these inorganic fibers contact each other after the organic binder is burned off. This prevents slipping on the surface of each inorganic fiber, thus facilitating an increase in the contact pressure.

In addition, the inorganic particles being dispersed in the self-crosslinking resin component provides a more uniform increase in the strength of the binder layer over a large part of the surface of each inorganic fiber. Thus, the shear failure load and the contact pressure of the holding sealing material can be increased.

Dispersion of the inorganic particles as the inorganic binder in the self-crosslinking resin component as the organic binder within the binder layer can be observed with a transmission electron microscope (hereinafter also referred to as "TEM"). The organic binder mainly containing carbon atoms has a low electron density and easily allows electron beams to pass therethrough, compared to the inorganic binder containing alumina, silica, and the like. Thus, in a TEM image, the self-crosslinking resin component as the organic binder is lighter in color than the inorganic particles as the inorganic binder.

In the holding sealing material, the amount of the inorganic binder to be attached per unit weight of the inorganic fibers is preferably 0.3 to 15.0 parts by weight, more preferably 0.5 to 10.0 parts by weight, still more preferably 0.5 to 3 parts by weight, particularly preferably 0.5 to 2 parts by weight, relative to 100 parts by weight of the inorganic fibers.

If the amount of the inorganic binder attached is less than 0.3 parts by weight relative to 100 parts by weight of the inorganic fibers, the effect of increasing the shear failure load and the contact pressure tends to be small due to an insufficient amount of the inorganic particles . If the amount is more than 15.0 parts by weight, although the effect of increasing the shear failure load and the contact pressure will remain substantially the same, the binder layer may become too hard, making it difficult to suppress scattering of the inorganic fibers.

Preferably, the binder layer further contains a polymeric dispersant.

If the binder layer contains a polymeric dispersant, the inorganic particles as the inorganic binder can be easily dispersed in the self-crosslinking resin component as the organic binder, further facilitating an increase in the coating strength of the binder layer.

The kind of the polymeric dispersant is not particularly limited. Examples include hydrophilic synthetic polymers such as anionic polymeric dispersants (e.g. , polycarboxylic acids and/or salts thereof, naphthalene sulfonate formaldehyde condensates and/or salts thereof, polyacrylic acids and/or salts thereof, polymethacrylic acids and/or salts thereof, and polyvinylsulfonic acids and/or salts thereof) and nonionic polymeric dispersants (e.g., polyvinyl alcohol, polyvinyl pyrrolidone, and polyethylene glycol); natural hydrophilic polymers such as gelatin, casein, and water soluble starch; and hydrophilic semisynthetic polymers such as carboxymethyl cellulose.

Among these, hydrophilic synthetic polymers are preferred, and anionic polymeric dispersants are more preferred. The number average molecular weight of the anionic polymeric dispersant is preferably 500 to 100000. The number average molecular weight of the anionic polymeric dispersant can be calculated, for example, from molecular weight measurement by gel permeation chromatography (GPC).

The coating strength of the binder layer is preferably 5.0·10⁶ m⁻¹·kg·s⁻² (5.0 MPa) or more. If the coating strength of the binder layer is 5.0·10⁶ m⁻¹·kg ·s⁻² (5.0 MPa) or more, separation of the binder layer and slipping of the inorganic fibers upon contact between the fibers are less likely to occur, thus facilitating an increase in the shear failure load and in the contact pressure.

The coating strength of the binder layer is the tensile strength at break of a dumbbell-shaped test piece having a thickness of 0.4 mm produced from the binder layer, as measured by a tension test at a speed of 300 mm/min at room temperature using an Instron tensile tester.

The test piece can be produced by pouring the binder solution as a raw material of the binder layer into a polypropylene resin plate having a frame, and leaving the binder solution at 50°C to be dried into a film.

Preferably, the holding sealing material is needle-punched. The inorganic fibers are entangled by needle punching, which strengthens entanglement between the inorganic fibers, facilitating an increase in the shear failure load and the contact pressure.

Needle punching can be performed using a needle punching device. The needle punching device includes a support plate for supporting a sheet of an inorganic fiber precursor, and a needle board disposed above the support plate and capable of moving back and forth in the punching direction (thickness direction of a base mat). A large number of needles are attached to the needle board. The needle board is moved relative to the sheet of the inorganic fiber precursor placed on the support plate, and the large number of needles are pushed in and out of the sheet of the inorganic fiber precursor. Thus, the fibers constituting the inorganic fiber precursor can be complicatedly entangled. The number of times to perform needle punching may be changed according to the target bulk density and the target basis weight.

The thickness of the holding sealing material is not particularly limited, but it is preferably 2.0 to 20 mm. If the thickness of the holding sealing material is more than 20 mm, the holding sealing material will lose its flexibility and thus be difficult to handle at the time of being wound around the exhaust gas treating body, and the holding sealing material will be susceptible to winding wrinkles and cracking.

If the thickness of the holding sealing material is less than 2.0 mm, the contact pressure of the holding sealing material will not be sufficient enough to hold the exhaust gas treating body. Thus, the exhaust gas treating body will easily come off. In addition, if the volume of the exhaust gas treating body changes, such a holding sealing material cannot easily absorb volume changes in the exhaust gas treating body. Thus, the exhaust gas treating body will be susceptible to cracking and the like.

The basis weight (weight per unit area) of the holding sealing material is not particularly limited, but it is preferably 200 to 4000 g/m², more preferably 1000 to 3000 g/m². If the basis weight of the holding sealing material is less than 200 g/m², the holding force will be insufficient; whereas if the basis weight of the holding sealing material is more than 4000 g/m², it will be difficult to reduce the bulk of the holding sealing material. Thus, the exhaust gas treating body will easily come off if the exhaust gas purification apparatus is produced using such a holding sealing material.

The bulk density of the holding sealing material (bulk density of the holding sealing material before being wound) is also not particularly limited, but it is preferably 0.10 to 0.30 g/cm³. If the bulk density of the holding sealing material is less than 0.10 g/cm³, it will be difficult to maintain the shape of the holding sealing material in a predetermined shape because the inorganic fibers are loosely entangled and thus easily separated.

A holding sealing material having a bulk density of more than 0.30 g/cm³ is rigid so that it is poorly wound around the exhaust gas treating body and susceptible to cracking.

The holding sealing material may further contain an expansive agent. The expansive agent is preferably one that expands in the range of 400°C to 800°C.

If the holding sealing material contains an expansive agent, the holding sealing material will expand in the range of 400°C to 800°C. Thus, the holding force of the holding sealing material can be increased even in a high temperature range above 700°C in which a decrease in the strength of glass fibers occurs.

Examples of expansive agents include vermiculite, bentonite, phlogopite, pearlite, expandable graphite, and expandable fluorophlogopite. Each of these expansive agents may be used alone or in combination of two or more thereof.

The amount of the expansive agent to be added is not particularly limited, but it is preferably 10 to 50% by weight, more preferably 20 to 30% by weight, relative to the total weight of the holding sealing material.

The method for producing the holding sealing material is described below.

The method for producing the holding sealing material is suitable as a method for producing the holding sealing material.

The method for producing the holding sealing material includes the steps of: preparing a mat containing inorganic fibers;
applying a binder solution containing an organic binder made of a self-crosslinking resin and an inorganic binder to the mat; and
drying the mat to which the binder solution was applied.

### (a) Mat preparing step

In the method for producing the holding sealing material, first, a mat containing inorganic fibers is prepared.

The mat constituting the holding sealing material can be obtained by various methods. For example, it can be produced by a method such as needling or papermaking.

In the case of needling, the mat can be produced by the following method, for example. Specifically, first, for example, a spinning mixture formed from raw materials such as a solution of basic aluminum chloride and a silica sol is spun by blowing to produce an inorganic fiber precursor having an average fiber diameter of 3 to 10 µm. Subsequently, the inorganic fiber precursor is compressed into a continuous sheet having a predetermined size. The continuous sheet is needle-punched, and then fired. Thus, the preparation of a mat is completed.

In the case of papermaking, inorganic fibers such as alumina fibers, silica fibers, an inorganic binder, and water are mixed in such a manner that the amount of the inorganic fibers in the raw material solution reaches a predetermined value, followed by stirring with a stirrer. Thus, a mixture is prepared. The mixture may optionally contain a colloidal solution of a high molecular compound or resin. Subsequently, the mixture is poured into a mold having a filtration mesh screen formed on its bottom, and the water in the mixture is removed through the mesh screen. Thus, a raw material sheet is produced. Then, the raw material sheet is thermally compressed under predetermined conditions. Thus, the preparation of a mat is completed.

### (b) Applying step

Next, a binder solution containing an organic binder made of a self-crosslinking resin and an inorganic binder is applied to the mat.

First, a mixture of an inorganic binder solution and a polymeric dispersant is prepared, and the mixture is mixed with an organic binder dispersed in water (i.e., a self-crosslinking resin solution). Thus, a binder solution is prepared. The mixture of an inorganic binder and a polymeric dispersant is prepared first so as to allow the surface of the inorganic particles as the inorganic binder to be coated with the polymeric dispersant. The mixture is then mixed with the organic binder dispersed in water so as to allow the inorganic particles as the inorganic binder coated with the polymeric dispersant and the self-crosslinking resin component as the organic binder to be dispersed in water.

The addition of the polymeric dispersant is optional. In the case where the polymeric dispersant is not added, the binder solution may be prepared by mixing the inorganic binder and the organic binder.

The inorganic binder solution is not particularly limited, and those mentioned in the description of the holding sealing material, such as alumina sol and silica sol, can be used.

The concentration of the inorganic binder solution is not particularly limited, but it is preferred to use a solution of the inorganic particles as the inorganic binder diluted to a concentration of about 0.2 to 20% by weight in terms of solids content.

The polymeric dispersant to be mixed with the inorganic binder solution is not particularly limited, and those mentioned in the description of the holding sealing material can be used. Thus, a detailed description thereof is omitted. A preferred kind of the polymeric dispersant and the range of the number average molecular weight are also as described above.

The concentration of the polymeric dispersant in the binder solution is 50 to 1000 ppm. If the concentration of the polymeric dispersant is less than 50 ppm, the amount of the polymeric dispersant will be insufficient so that it will be difficult to suppress agglomeration of the inorganic particles as the inorganic binder and the self-crosslinking resin component as the organic binder in the binder solution; whereas if the concentration is more than 1000 ppm, the dispersing effect will remain the same so that the addition of an excess amount of the polymeric dispersant is not preferred.

The self-crosslinking resin as the organic binder is not particularly limited, and those mentioned in the description of the holding sealing material can be used. Thus, a detailed description thereof is omitted.

The concentration of the organic binder is not particularly limited, but it is preferred to use a solution of the self-crosslinking resin as the organic binder diluted to a concentration of about 0.2 to 20% by weight in terms of solids content.

The mixing ratio of the mixture of the inorganic binder and the polymeric dispersant to the organic binder solution is by solids weight of the inorganic particles as the inorganic binder in the mixture of the inorganic binder and the polymeric dispersant to the self-crosslinking resin as the organic binder component in the organic binder solution of 3:1 to 1:3.

A pH adjuster for adjusting the pH of the binder solution may be added to the binder solution.

Subsequently, the binder solution is applied to the mat.

The method for bringing the mat into contact with the binder solution during the applying step is not particularly limited. For example, the binder solution may be applied to the inorganic fibers in the mat by allowing the mat to be impregnated in the binder solution, or by dropping the binder solution onto the mat by a method such as curtain coating. Alternatively, the binder solution may be spayed to the mat as in spray coating.

Further, preferably, the mat to which the binder solution was applied is dewatered so as to adjust the amount of the binder solution applied to 50 to 200 parts by weight relative to 100 parts by weight of the inorganic fibers constituting the mat.

### (c) Drying step

Next, the mat to which the binder solution was applied is dried with hot air.

In the drying step, the mat to which the binder solution was applied is dried with hot air (drying step) to dry the organic binder and the inorganic binder to evaporate the solvent in the binder solution.

The temperature of drying with hot air is not particularly limited, but preferably, the temperature of hot air is about 100°C to 150°C.

The holding sealing material can be produced through these steps.

Thereafter, the holding sealing material may further be subjected to a cutting step in which the holding sealing material is cut into a predetermined shape to obtain a holding sealing material having a projecting portion and a recessed portion as illustrated in Fig. 1.

The method for press-fitting a wound body is described below.

The method for press-fitting a wound body includes the steps of: producing a wound body in which the holding sealing material is wound around an exhaust gas treating body;
providing a press-fitting jig having an inner space that gradually increases in size from a small radius end portion to a large radius end portion and fitting the small radius end portion of the press-fitting jig into one end of a metal casing so as to fix the press-fitting jig therein; and
pushing the wound body into the press-fitting jig from the large radius end portion so as to press-fit the wound body into the metal casing.

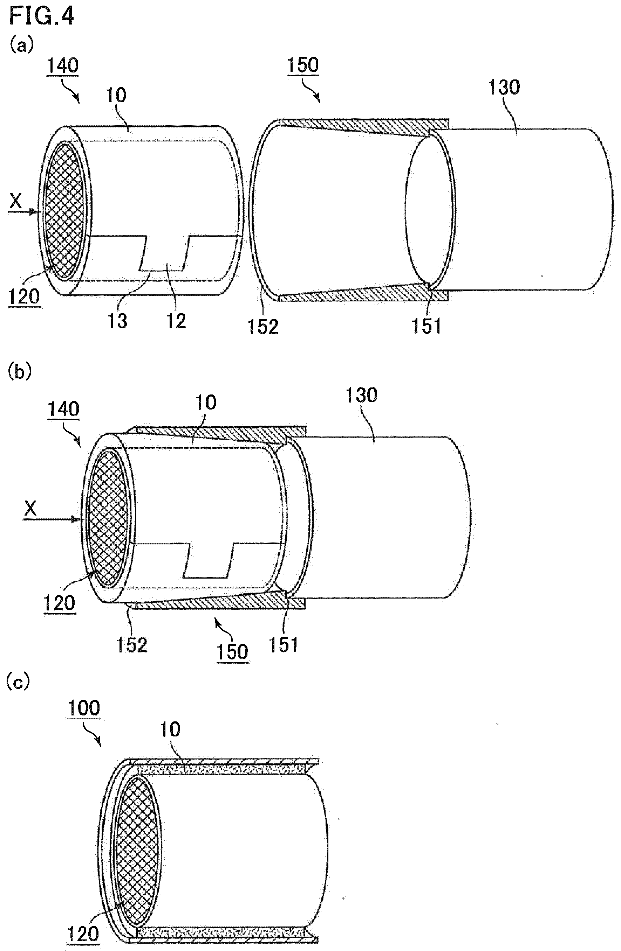

The method for press-fitting a wound body is described with reference to Fig. 4(a), Fig. 4(b), and Fig. 4(c).

Fig. 4(a) is a schematic perspective view of the method for press-fitting a wound body. In Fig. 4(a), the press-fitting direction is indicated with an arrow X.

As illustrated in Fig. 4(a), first, a wound body 140 in which a holding sealing material 10 is wound around an exhaust gas treating body 120 is provided.

The wound body 140 can be produced by winding the holding sealing material 10 around the exhaust gas treating body (honeycomb structured body) 120 described later in such a manner that the projecting portion 12 and the recessed portion 13 of the holding sealing material 10 illustrated in Fig. 1 fit each other.

Further, a press-fitting jig is provided.

A press-fitting jig 150 illustrated in Fig. 4(a) generally has a substantially cylindrical shape, and the inner space thereof gradually increases in size from one end to the other end.

One end of the press-fitting jig 150 is a small radius end portion 151 having an inside diameter corresponding to a diameter slightly smaller than the inside diameter of a metal casing 130. The other end of the press-fitting jig 150 is a large radius end portion 152 having an inside diameter at least corresponding to the outside diameter of the wound body 140.

Subsequently, as illustrated in Fig. 4(b), the wound body 140 is pushed into the press-fitting jig 150 from the large radius end portion 152 so as to press-fit the wound body 140 into the metal casing 130.

The method for press-fitting the wound body into the metal container is not particularly limited. For example, the wound body may be pushed with hands to press-fit the wound body into the metal container.

During press-fitting, the holding sealing material 10 slides along the inner surface of the press-fitting jig 150 toward the metal casing 130.

If the binder layer is peeled off from the inorganic fibers during press-fitting, the organic binder will be attached to the inner surface of the press-fitting jig. However, when the holding sealing material is used, the binder layer will not be easily peeled off from the inorganic fibers so that the surface of the press-fitting jig is less susceptible to soiling.

Since the surface of the press-fitting jig is less susceptible to soiling, shear failure which results in press-fitting failure does not occur in the holding sealing material even when the same press-fitting jig is repeatedly used for press-fitting. It is also advantageous in that the press-fitting jig does not need to be frequently washed.

An exhaust gas purification apparatus 100 as illustrated in Fig. 4 (c) can be produced by press-fitting the wound body by the above method.

The exhaust gas purification apparatus is described below.

The exhaust gas purification apparatus includes: a metal casing;
an exhaust gas treating body housed in the metal casing; and
a holding sealing material wound around the exhaust gas treating body and arranged between the exhaust gas treating body and the metal casing,
wherein the holding sealing material is the holding sealing material.

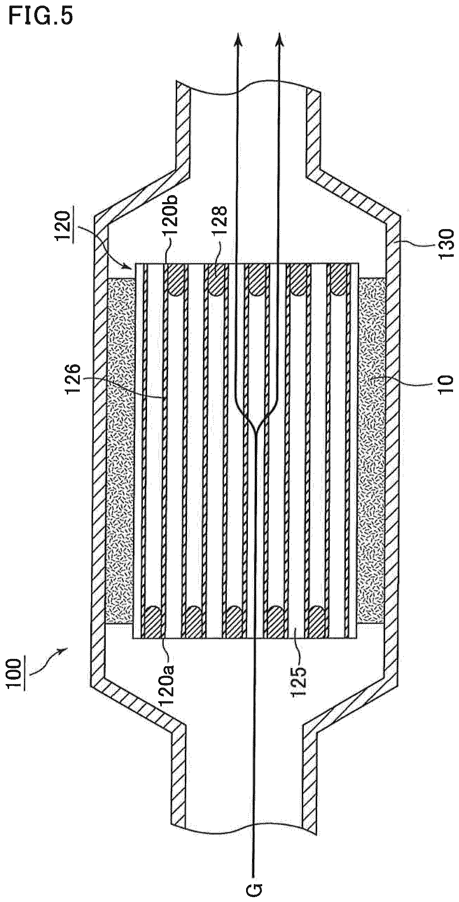

Fig. 5 is a schematic cross-sectional view of an example of the exhaust gas purification apparatus.

As illustrated in Fig. 5, the exhaust gas purification apparatus 100 includes the metal casing 130, the exhaust gas treating body 120 housed in the metal casing 130, and the holding sealing material 10 arranged between the exhaust gas treating body 120 and the metal casing 130.

The exhaust gas treating body 120 has a pillar shape in which a large number of cells 125 are arranged in parallel in a longitudinal direction with a cell wall 126 between each cell. If necessary, an inlet tube for introducing exhaust gas discharged from an internal combustion engine is connected to one end portion of the metal casing 130, and an outlet tube for discharging the exhaust gas that has passed through the exhaust gas purification apparatus to the outside is connected to the other end portion of the metal casing 130.

Passage of exhaust gas through the exhaust gas purification apparatus 100 having the above-described structure is described with reference to Fig. 5.

As illustrated in Fig. 5, exhaust gas discharged from the internal combustion engine into the exhaust gas purification apparatus 100 (in Fig. 5, the exhaust gas is indicated by G, and the flow of exhaust gas is indicated by arrows) flows into one cell 125 that is open at an exhaust gas inlet-side end face 120a of the exhaust gas treating body (i.e., the honeycomb filter) 120, and then passes through the cell wall 126 between each cell 125. At this point, PM in the exhaust gas is collected by the cell wall 126, and the exhaust gas is purified. The purified exhaust gas is discharged to the outside via another cell 125 that is open at an exhaust gas outlet-side end face 120b.

In the exhaust gas purification apparatus 100 illustrated in Fig. 5, the holding sealing material 10 is the holding sealing material.

The material of the metal casing constituting the exhaust gas purification apparatus is not particularly limited as long as it is a heat-resistant metal. Specific examples include metals such as stainless steel, aluminum, and iron.

In addition to the substantially cylindrical shape, the casing can suitably have a shape such as a clam-shell shape, a shape with a substantially elliptical cross section, or a shape with a substantially polygonal cross section. The substantially cylindrical shape, substantially elliptical shape, and substantially polygonal shape are preferred because the exhaust gas purification apparatus is preferably produced by press-fitting the wound body into the casing.

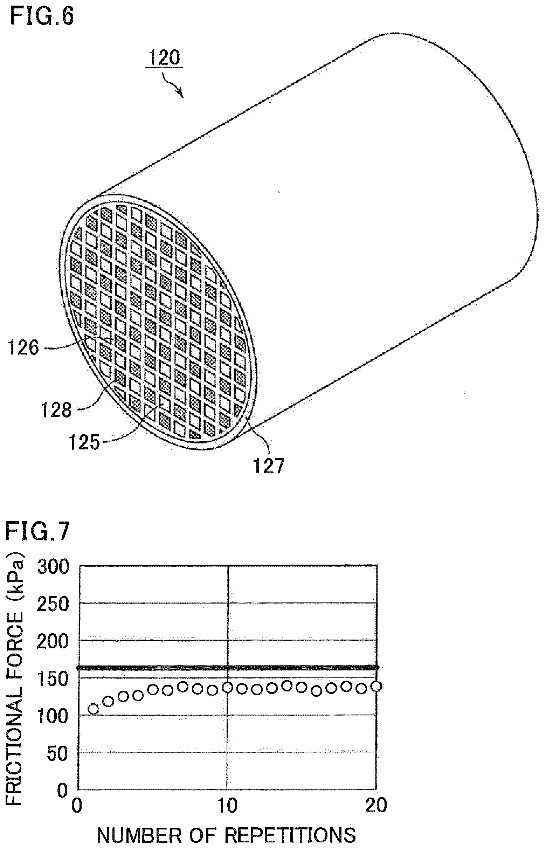

Fig. 6 is a schematic perspective view of an example of the exhaust gas treating body constituting the exhaust gas purification apparatus.

The exhaust gas treating body 120 illustrated in Fig. 6 is a ceramic honeycomb structured body having a pillar shape in which the large number of cells 125 are arranged in parallel in the longitudinal direction with the cell wall 126 between each cell 125. One of the ends of each cell 125 is plugged with a plug material 128. In addition, a peripheral coat layer 127 is provided on the periphery of the honeycomb structured body in order to reinforce the periphery of the honeycomb structured body, arrange the shape, and improve thermal insulating properties of the honeycomb structured body.

In the case where each of the cells 125 is plugged at one end, it is preferred that the end-plugged cells and unplugged cells be alternately arranged when the exhaust gas treating body 120 is viewed from one of the ends.

The cross-sectional shape of the exhaust gas treating body 120 taken along a direction perpendicular to the longitudinal direction is not particularly limited. It may be a substantially circular shape or a substantially elliptical shape. Alternatively, it may be a substantially polygonal shape such as a substantially triangular shape, substantially quadrangular shape, substantially pentagonal shape, or substantially hexagonal shape.

The cross-sectional shape of each cell 125 constituting the exhaust gas treating body 120 may be a substantially polygonal shape such as a substantially triangular shape, substantially quadrangular shape, substantially pentagonal shape, or substantially hexagonal shape. Alternatively, it may be a substantially circular shape or a substantially elliptical shape. The exhaust gas treating body 120 may include a combination of cells having different cross-sectional shapes.

The materials constituting the exhaust gas treating body 120 are not particularly limited. Non-oxide materials such as silicon carbide and silicon nitride, and oxide materials such as cordierite and aluminum titanate can be used. In particular, a porous fired body made of a non-oxide material such as silicon carbide or silicon nitride among the above is preferred.

Porous fired bodies made of these materials are brittle and thus easily breakable by mechanical shock or the like. However, in the case of the exhaust gas purification apparatus, the holding sealing material 10 disposed around the lateral side of the exhaust gas treating body 120 absorbs shock. Thus, the exhaust gas treating body 120 can be prevented from cracking or the like resulting from mechanical shock and thermal shock.

The exhaust gas treating body constituting the exhaust gas purification apparatus may support a catalyst for conversion of exhaust gas. Preferred examples of catalysts to be supported include noble metals such as platinum, palladium, and rhodium. Among these, platinum is more preferred. Examples of other catalysts that can be used include alkali metals such as potassium and sodium and alkaline-earth metals such as barium. Each of these catalysts may be used alone or in combination of two or more thereof. These catalysts being supported facilitates removal of PM by combustion and allow for conversion of toxic exhaust gas.

The exhaust gas treating body constituting the exhaust gas purification apparatus may be an integral honeycomb structured body made of cordierite or the like and integrally formed. Alternatively, the exhaust gas treating body may be an aggregated honeycomb structured body formed by combining a plurality of pillar-shaped honeycomb fired bodies made of silicon carbide or the like via a paste mainly made of ceramic, each honeycomb fired body having a large number of through holes arranged in parallel in the longitudinal direction with a partition wall between each through hole.

In the exhaust gas treating body constituting the exhaust gas purification apparatus, each cell may not be provided with a plug material and thus may not be plugged at one end. In this case, the exhaust gas treating body is used to support a catalyst such as platinum so as to function as a catalyst supporting carrier to convert harmful gas components such as CO, HC, or NOx contained in exhaust gas.

The effects of the holding sealing material and other aspects are described below.

(1) In the holding sealing material, the binder layer that coats the surface of each inorganic fiber contains an inorganic binder in addition to the organic binder.

The inorganic binder contains inorganic particles. The presence of the inorganic particles in the binder layer increases the coating strength of the binder layer.

In addition, the organic binder is a self-crosslinking resin. The self-crosslinking resin undergoes self-crosslinking around the inorganic particles, forming a firm crosslinked layer with each inorganic particle as the core. Thus, the coating strength of the binder layer containing the inorganic particles and the self-crosslinking resin is higher than that of a layer containing only the self-crosslinking resin.

As a result of a higher coating strength of the binder layer, the binder layer is less likely to be peeled off from the inorganic fibers even when press-fitting is performed using a press-fitting jig. Thus, the materials of the binder layer are less likely to be attached to the press-fitting jig.

The holding sealing material is less likely to cause soiling of the surface of a press-fitting jig even when the press-fitting jig is used for press-fitting in a high temperature environment. Further, unclean substances on the surface of the press-fitting jig are less likely to accumulate above a certain level. Thus, shear failure does not occur in the holding sealing material even when the same press-fitting jig is used repeatedly for press-fitting.

(2) The method for producing the holding sealing material includes the steps of: preparing a mat containing inorganic fibers; applying a binder solution containing an organic binder made of a self-crosslinking resin and an inorganic binder to the mat; and drying the mat to which the binder solution was applied. Therein, the binder solution further contains a polymeric dispersant, the concentration of the polymeric dispersant in the binder solution is 50 to 1000 ppm, and a mixing ratio by solids weight of the inorganic particles as the inorganic binder in the mixture of the inorganic binder and the polymeric dispersant to the self-crosslinking resin as the organic binder component in the organic binder solution of 3:1 to 1:3

With these steps, it is possible to produce the holding sealing material in which the binder layer containing the organic binder made of a self-crosslinking resin and the inorganic binder is formed on the surface of each inorganic fiber.

(3) In the method for press-fitting a wound body, the holding sealing material is wound around the exhaust gas treating body to produce a wound body, and the wound body is press-fitted into the metal casing using a press-fitting jig.

The holding sealing material is less likely to cause soiling of the surface of a press-fitting jig even when the press-fitting jig is used for press-fitting in a high temperature environment. Thus, shear failure which results in press-fitting failure does not occur in the holding sealing material even when the same press-fitting jig is repeatedly used for press-fitting. In addition, since unclean substances on the surface of the press-fitting jig are less likely to accumulate above a certain level, the press-fitting jig does not need to be frequently washed even when the same press-fitting jig is repeatedly used for press-fitting.

### EXAMPLES

Examples that more specifically disclose the present invention are described below, but the present invention is not limited to these examples.

### (Example 1)

### (a) Mat preparing step

First, a mat containing inorganic fibers was prepared by the following procedure.

### (a-1) Spinning step

An aqueous solution of basic aluminum chloride having an Al content of 70 g/l at a ratio of Al:Cl = 1:1.8 (atomic ratio) was prepared. A silica sol was added to the solution in such a manner that the ratio of components in inorganic fibers after firing would be Al₂O₃:SiO₂ = 72:28 (weight ratio), followed by addition of an appropriate amount of an organic polymer (polyvinyl alcohol). Thus, a mixture was prepared.

The resulting mixture was concentrated into a spinning mixture, and the spinning mixture was spun by blowing. Thus, an inorganic fiber precursor having an average fiber diameter of 5.1 µm was prepared.

### (a-2) Compressing step

The inorganic fiber precursor obtained in step (a-1) above was compressed into a continuous sheet.

### (a-3) Needle-punching step

The sheet obtained in step (a-2) above was continuously needle-punched under the following conditions to produce a needle-punched body.

First, a needle board having needles attached thereto at a density of 21 pcs/cm² was provided. Next, the needle board was set above one of the surfaces of the sheet, and the sheet was needle-punched by allowing the needle board to descend and ascend once in the thickness direction of the sheet. Thus, a needle-punched body was produced. At this point, the needles were allowed to penetrate the sheet until barbs formed on the tips of the needles had completely protruded from the opposite surface.

### (a-4) Firing step

The needle-punched body obtained in step (a-3) above was continuously fired at a maximum temperature of 1250°C. Thus, a fired sheet formed form inorganic fiber including alumina and silica at a ratio (part by weight) of 72:28 was produced. The average fiber diameter of the inorganic fibers was 5.1 µm, and the minimum value was 3.2 µm. The fired sheet thus obtained had a bulk density of 0.15 g/cm³ and a basis weight of 1400 g/m².

### (a-5) Cutting step

The fired sheet produced in step (a-4) above was cut into a mat containing the inorganic fibers.

### (b) Applying step

### (b-1) Organic binder solution preparing step

An organic binder (ZEON Corporation, Nipol LX852 (solids concentration: 45 wt%))containing a self-crosslinking resin (acrylate-type latex) having a glass-transition temperature of -6°C was diluted with water. Thus, an organic binder solution having a solids concentration of 2% by weight was prepared.

### (b-2) Inorganic binder solution preparing step

An alumina colloidal solution (alumina sol) (Nissan Chemical Industries, Ltd., alumina sol 550 (solids concentration: 15 wt%)) was diluted with water, and an anionic polymeric dispersant (SAN NOPCO Limited, Nopcosant RFA) was added thereto, followed by sufficient stirring. Thus, an inorganic binder solution was prepared in which the inorganic particles as the inorganic binder had a solids concentration of 2% by weight and the anionic polymeric dispersant had a concentration of 500 ppm.

### (b-3) Binder solution preparing step

The organic binder solution obtained in step (b-1) above was added to the inorganic binder solution obtained in step (b-2) above at a weight ratio of the inorganic binder solution to the organic binder solution of 1:1, and the mixture was sufficiently stirred. Thus, a binder solution was prepared in which the self-crosslinking resin as the organic binder component had a solids concentration of 1% by weight, the inorganic particles as the inorganic binder had a solids concentration of 1% by weight, and the anionic polymeric dispersant had a concentration of 250 ppm.

### (b-4) Applying step

The binder solution obtained in step (b-3) above was applied to the mat produced in the mat preparing step (a) by curtain coating.

### (b-5) Dewatering step

The mat to which the binder solution was applied, which was obtained in step (b-4) above, was dewatered by suction using dewatering equipment in such a manner that the amount of the binder solution applied would be adjusted to 100 parts by weight relative to 100 parts by weight of the inorganic fibers.

### (c) Drying step

The mat that underwent step (b-5) above was heat-dried by blowing hot air at a temperature of 130°C to one of the main surfaces of the mat. Thus, a holding sealing material was obtained.

### (Example 2)

A holding sealing material was produced in the same manner as in Example 1, except that in the organic binder solution preparing step (b-1), an organic binder (BASF, Acronal DS2373 (solids concentration: 50 wt%)) containing a self-crosslinking resin (acrylate-type latex) having a glass-transition temperature of -36°C was used.

### (Example 3)

A holding sealing material was produced in the same manner as in Example 1, except that in Example 2, the concentration of each component in the binder solution was changed to prepare a binder solution in which the self-crosslinking resin as the organic binder component had a solids concentration of 4% by weight, the inorganic particles as the inorganic binder had a solids concentration of 4% by weight, and the anionic polymeric dispersant had a concentration of 1000 ppm.

### (Comparative Example 1)

A holding sealing material was produced in the same manner as in Example 1, except the following points.

In the organic binder solution preparing step (b-1), an organic binder (ZEON Corporation, Nipol LX811H (solids concentration: 50 wt%)) containing acrylate-type latex having a glass-transition temperature of 1°C was used.

The inorganic binder solution preparing step (b-2) was not carried out to prepare a binder solution free of the inorganic binder and the polymeric dispersant in which the resin component in the organic binder had a solids concentration of 1% by weight.

### (Comparative Example 2)

A holding sealing material was produced in the same manner as in Example 1, except that the inorganic binder solution preparing step (b-2) was not carried out in Example 1 to prepare a binder solution free of the inorganic binder and the polymeric dispersant in which the self-crosslinking resin component in the organic binder had a solids concentration of 1% by weight.

### (Comparative Example 3)

A holding sealing material was produced in the same manner as in Example 3, except that the inorganic binder solution preparing step (b-2) was not carried out in Example 3 to prepare a binder solution free of the inorganic binder and the polymeric dispersant in which the self-crosslinking resin component in the organic binder had a solids concentration of 4% by weight.

### (Pull-out test)

The holding sealing materials produced in the examples and the comparative examples were cut into test pieces having a size of 50 mm × 50 mm. Twenty test pieces were prepared for each holding sealing material.

The test pieces were repeatedly tested 10 times for the pull-out test by the procedure described herein using a pull-out testing device illustrated in Fig. 2.

The test was terminated at the point of occurrence of shear failure in the test pieces during repeated tests.

The test pieces were compressed to a bulk density (GBD) of 0.5 g/cm³, and the temperature between the test pieces and the stainless steel plate was adjusted to 50°C. The pull-out speed was 25 mm/min. The stainless steel plate was a SUS 409 plate that had been smoothened to have a flatness of No. 2B or higher and an Ra of 0.04 to 0.07.

The pull-out test was repeated 20 times for the holding sealing material produced in Example 2.

### (Observation of unclean substances on the surface of the stainless steel plate)

The pull-out test was performed once on an unused stainless steel plate to visually observe unclean substances attached to the stainless steel plate.

The amount of unclean substances was compared between the stainless steel plates in the examples and the comparative examples. The comparison revealed that the amount of unclean substances was small in the examples.

When the soiled stainless steel plates were heated at 300°C for 10 minutes, the color of the unclean substances was changed to brown. Thus, the unclean substances were confirmed to be organic components.

Table 1 shows the results of observation of unclean substances on the surface of each stainless steel plate.

### (Measurement of frictional force)

In the pull-out test, the static frictional force applied to the stainless steel plate was measured, and the frictional force at which the static frictional force was maximum (the maximum static frictional force) was recorded for every pull-out test.

Table 1 shows the frictional force in the first test and the maximum frictional force out of 10 repeated tests. It should be noted that the maximum frictional force 139 kPa in Example 2 is a value obtained in the 14th test.

Table 1 also shows the presence or absence of shear failure during repeated tests. The numbers in parentheses after the word "Occurred" indicate the ordinal number of the test at which the shear failure occurred.

### (Measurement of shear failure load)

A shear failure load testing device illustrated in Fig. 3 was used to measure the shear failure load of the test pieces of the examples and the comparative examples by the procedure described herein.

The test pieces were compressed to a bulk density (GBD) of 0.5 g/cm³, and the temperature between the test pieces and the stainless steel plate was adjusted to 50°C. The pull-out speed was 25 mm/min.

Table 1 shows the measurement results of the shear failure load.

**[Table 1]**

| | Inorganic binder | Organic binder | | Soiling evaluation | Frictional force (kPa) | | | Shear failure load (kPa) |
|---|---|---|---|---|---|---|---|---|
| | Amount (wt%) | Amount (wt%) | Tg(°C) | | First time | Maximum | Shear failure | |
| Example 1 | 1 | 1 | -6 | Small | 136 | 189 | Not occurred | 247 |
| Example 2 | 1 | 1 | -36 | Small | 108 | 139 | Not occurred | 163 |
| Example 3 | 4 | 4 | -36 | Small | 126 | 173 | Not occurred | 210 |
| Comparative Example 1 | 0 | 1 | 1 | Large | 78 | 127 | Occurred (10) | 123 |
| Comparative Example 2 | 0 | 1 | -6 | Large | 69 | 114 | Occurred (6) | 114 |
| Comparative Example 3 | 0 | 4 | -36 | Large | 73 | 112 | Occurred (3) | 106 |

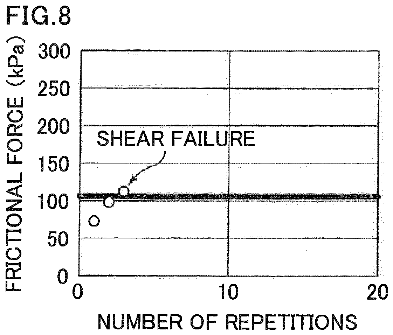

Fig. 7 and Fig. 8 each show a scatter plot of the pull-out test in Example 2 and Comparative Example 3, respectively, with the horizontal axis representing the number of repetitions and the vertical axis representing the frictional force.

The bold horizontal lines in Fig. 7 and Fig. 8 each indicate the shear failure load of the test pieces. Shear failure occurs when the frictional force exceeds the shear failure load.

As shown in Table 1, in the case of the holding sealing materials of the examples, the amount of unclean substances attached to the stainless steel plate was small.

Shear failure did not occur in the examples but occurred in the comparative examples.

In addition, when the test was repeated, the increase rate of the frictional force in the examples was lower than that in the comparative examples.

The slopes of the plots in Example 2 and Comparative Example 3 respectively shown in Fig. 7 and Fig. 8 each indicate the increase rate of the frictional force. According to the plots in Example 2 shown in Fig. 7, the increase in the frictional force stops in the middle, and the frictional force does not reach the shear failure load. Thus, shear failure did not occur even after 20 repeated tests. The results suggest that unclean substances on the stainless steel plate will not accumulate above a certain level. In contrast, according to the plots of Comparative Example 3 shown in Fig. 8, the increase in the frictional force in one test was large, and shear failure occurred in the third test.

In addition, in the holding sealing material of each example, the binder layer contains the inorganic particles as the inorganic binder so that the coating strength of the binder layer is increased and the binder layer is not easily deformed at the intersections of the inorganic fibers, thus preventing slippage of the fibers. This is presumably the reason for the increased strength against shear failure. In the holding sealing material of each comparative example, the binder layer is free of the inorganic binder so that the coating strength of the binder layer is low and the binder layer is deformed at the intersections of the inorganic fiber, thus causing slippage of the fibers. This is presumably the reason for susceptibility to shear failure.

### REFERENCE SIGNS LIST

- 10: holding sealing material
- 11: mat
- 100: exhaust gas purification apparatus
- 120: exhaust gas treating body
- 130: metal casing
- 140: wound body
- 150: press-fitting jig
- 151: small radius end portion
- 152: large radius end portion

## Claims

1. A method for producing a holding sealing material (10), the holding sealing material (10) comprising:
a mat (11) having a predetermined thickness, the mat (11) containing inorganic fibers having a surface coated with a binder layer,
wherein the binder layer contains an organic binder, an inorganic binder and a polymeric dispersant, and
the organic binder is a self-crosslinking resin,
the method comprising the steps of:
preparing the mat (11) containing the inorganic fibers;
applying a binder solution containing the organic binder made of the self-crosslinking resin and the inorganic binder to the mat (11) ; and
drying the mat (11) to which the binder solution was applied;
wherein the binder solution further contains the polymeric dispersant,
the concentration of the polymeric dispersant in the binder solution is 50 to 1000 ppm, and
a mixing ratio by solids weight of the inorganic particles as the inorganic binder in the mixture of the inorganic binder and the polymeric dispersant to the self-crosslinking resin as the organic binder component in the organic binder solution of 3:1 to 1:3.

## Patentansprüche

1. Verfahren zur Herstellung eines haltenden Dichtungsmaterials (10), wobei das haltende Dichtungsmaterial (10) aufweist:
eine Matte (11) mit einer vorbestimmten Dicke; wobei die Matte (11) anorganische Fasern enthält, welche eine Oberfläche aufweisen, die mit einer Bindemittelschicht beschichtet sind,
wobei die Bindemittelschicht ein organisches Bindemittel, ein anorganisches Bindemittel und ein polymeres Dispergiermittel enthält, und
das organische Bindemittel ein selbstvernetzendes Harz ist;
wobei das Verfahren die Schritte aufweist:
Bereitstellen der die anorganischen Fasern enthaltenden Matte (11);
Auftragen einer Bindemittellösung enthaltend das organische Bindemittel aus dem selbstvernetzenden Harz und dem anorganischen Bindemittel auf die Matte (11); und
Trocknen der Matte (11), auf welche die Bindemittellösung aufgetragen wurde;
wobei die Bindemittellösung weiterhin das polymere Dispergiermittel enthält;
wobei die Konzentration des polymeren Dispergiermittels in der Bindemittellösung 50 zu 1000 ppm ist, und wobei das Mischverhältnis bezogen auf die Feststoffmasse der anorganischen Teilchen als das anorganische Bindemittel in der Mischung des anorganischen Bindemittels und des polymeren Dispergiermittels zum selbstvernetzenden Harz als die organische Bindemittelkomponente in der organischen Bindemittellösung 3:1 bis 1:3 ist.

## Revendications

1. Procédé de production d'un matériau d'étanchéité de maintien (10), le matériau d'étanchéité de maintien (10) comprenant :
un mat (11) ayant une épaisseur prédéterminée, le mat (11) contenant des fibres inorganiques ayant une surface revêtue d'une couche de liant,
dans lequel la couche de liant contient un liant organique, un liant inorganique et un dispersant polymérique, et
le liant organique est une résine d'autoréticulation, le procédé comprenant les étapes de :
préparation du mat (11) contenant des fibres inorganiques ;
application d'une solution de liant contenant le liant organique réalisé en la résine d'autoréticulation et le liant inorganique au mat (11) ; et
séchage du mat (11) auquel a été appliquée la solution de liant ;
dans lequel la solution de liant contient en outre le dispersant polymérique,
la concentration du dispersant polymérique dans la solution de liant est de 50 à 1 000 ppm, et
un rapport de mélange en poids de solides entre les particules inorganiques en tant que liant inorganique dans le mélange du liant inorganique et du dispersant polymérique et la résine d'autoréticulation en tant que composant de liant organique dans la solution de liant organique est de 3:1 à 1:3.
